# EUROPÄISCHE PATENTANMELDUNG

(11) **EP 3 163 110 A1**
(43) Veröffentlichungstag der Anmeldung: **03.05.2017**
(21) Anmeldenummer: 16195308.8
(22) Anmeldetag: 24.10.2016
(51) Int. Cl.: F16D 51/22, F16D 65/08, F16D 125/30

(54) **BREMSBACKE**

(30) Priorität: 26.10.2015 DE 102015118233
(71) Anmelder: SAF-HOLLAND GmbH, 63856 Bessenbach (DE)
(72) Erfinder: Arpaci, Muhammet, 63741 Aschaffenburg (DE)
(74) Vertreter: Müller Schupfner & Partner Patent- und Rechtsanwaltspartnerschaft mbB

(57) **Zusammenfassung**

Bremsbacke, insbesondere einer Trommelbremse für Nutzfahrzeuge, umfassend ein Belagblech und eine Stegeinheit, wobei die Stegeinheit als einteiliger Körper umfassend zumindest zwei Stegbleche ausgebildet ist.

## Beschreibung

Die vorliegende Erfindung betrifft eine Bremsbacke, insbesondere einer Trommelbremse für Nutzfahrzeuge, eine Stegeinheit für eine Bremsbacke sowie eine Trommelbremse.

Trommelbremsen sind im Nutzfahrzeugsegment sowie für Anhänger immer noch der bevorzugte Bremsentyp. Der Grundaufbau besteht dabei aus einer sich drehenden Bremstrommel, an welcher von innen zwei beweglich gelagerte Bremsbacken durch eine entsprechende Vorrichtung angepresst werden, wodurch die Bremskraft erzeugt wird. Bekannte Bremsbacken bestehen meist aus mehreren Teilen, die z. B. durch Schweißen und Pressen zusammengefügt werden: dem Belagblech, zwei Stegen, welche rückseitig an dem Belagblech befestigt sind, und entsprechenden Lagerstellen oder Lagerschalen, welche der Lagerung der Bremsbacke dienen. Der Fertigungs- und Handlingaufwand bei der Herstellung der Bremsbacken ist entsprechend hoch. Außerdem entstehen beim Zusammenfügen aufgrund der relativ hohen Anzahl von Bauteilen schnell Ungenauigkeiten, insbesondere als Folge der sich addierenden Toleranzen.

Es ist daher Aufgabe der vorliegenden Erfindung, eine Bremsbacke, eine Stegeinheit einer Bremsbacke sowie eine Trommelbremse anzugeben, welche schneller, einfacher und dabei noch genauer und kostengünstiger herzustellen sind.

Diese Aufgabe wird durch eine Bremsbacke gemäß Anspruch 1, eine Stegeinheit gemäß Anspruch 12 sowie durch eine Trommelbremse gemäß Anspruch 14 gelöst. Weitere Vorteile und Merkmale ergeben sich aus den Unteransprüchen sowie der Beschreibung und den beigefügten Figuren.

Erfindungsgemäß umfasst eine Bremsbacke, insbesondere einer Trommelbremse für Nutzfahrzeuge, ein Belagblech und eine Stegeinheit, wobei die Stegeinheit als einteiliger Körper mit zumindest zwei Stegblechen ausgebildet ist. Typischerweise umfasst die Trommelbremse eine Bremstrommel, an welche von innen zwei, z. B. auf einem Bremsträger bzw. einer Bremsankerplatte, beweglich gelagerte Bremsbacken durch eine entsprechende Vorrichtung angepresst werden. Die Lagerung der Bremsbacke sowie die Krafteinleitung erfolgt über die Stegbleche, welche vorteilhafterweise der ganzen Anordnung die nötige Steifigkeit verleihen. Das Anpressen der Bremsbacken kann direkt mechanisch über eine Nockenwelle, einen Spreizkeil oder über einen Radbremszylinder erfolgen. Zum Bereitstellen der eigentlichen Bremswirkung ist auf dem Belagblech der Bremsbacke ein entsprechender Bremsbelag angeordnet, insbesondere beispielsweise genietet. Im Stand der Technik sind rückseitig am Belagblech zwei voneinander unabhängige Flansche oder auch Stege angeschweißt. Diese müssen relativ zum Belagblech sowie zueinander exakt positioniert werden, da, wie bereits erwähnt, über die Stege oder Stegbleche die Lagerung der Bremsbacke sowie die Krafteinleitung erfolgt. Mit Vorteil weist nun die Bremsbacke die Stegeinheit auf, welche als einteiliger bzw. einstückiger Körper umfassend die zumindest zwei Stegbleche ausgebildet ist. Diese Konfiguration lässt Toleranzen entfallen, die durch das Zusammensetzen der einzelnen Bauteile entstehen würden. Da die Stegeinheit aus einem Stück besteht, erfordert die Koordinierung bei der Montage weniger Aufwand. Fertigungs- und Montageschritte können damit gegenüber dem Stand der Technik entfallen. Die Stegeinheit kann als Einheit rückseitig auf dem Belagblech form- und/oder kraft- und/oder stoffschlüssig befestigt werden. Bevorzugt ist sie z. B. angeschweißt. Vorteilhafterweise ist die Stegeinheit aus einem homogenen Material ausgebildet.

Gemäß einer Ausführungsform ist die Stegeinheit z. B. ein Tiefziehteil, wobei die Stegeinheit und das Belagblech bevorzugt über die Schweißverbindung verbunden sind. Auch kann die Stegeinheit aus einer Vielzahl von, vorzugsweise zwei, tiefgezogenen Blechen ausgebildet sein, welche miteinander verklebt und/oder verschweißt sind. So kann die Stegeinheit einen sandwich-artigen Aufbau aufweisen. Alternativ kann die Stegeinheit auch durch Schmieden, Biegen, Dengeln, Hydroformen oder Drücken hergestellt werden. Die Stegeinheit kann auch gefaltet sein. Alternativ kann die Stegeinheit auch als einteilige Schweißkonstruktion ausgebildet sein, welche dann als eine Einheit am Belagblech befestigt wird. Der Begriff Einheit bzw. die Einteiligkeit ist insbesondere dahingehend zu verstehen, dass die Stegeinheit bevorzugt (durchgehend) aus einem homogenen Gefüge oder Material gebildet ist. Je nach Ausführungsform ist dabei aber nicht ausgeschlossen, dass dieses Gefüge ggf. durch z. B. eine Schweißnaht unterbrochen wird. Wichtig ist vielmehr, dass die Stegeinheit, wenn sie nicht am Belagträger angeordnet ist, ein (einziges) Bauteil ist, umfassend zumindest zwei Stegbleche, welche in der Regel entweder über ein Querblech oder über ein Verbindungsblech verbunden sind.

Gemäß einer Ausführungsform weist die Stegeinheit zumindest ein Verbindungsblech auf, welches die zwei Stegflächen verbindet. Gemäß einer Ausführungsform ist das Verbindungsblech im Wesentlichen parallel zum Belagblech orientiert bzw. bildet dessen Orientierung nach. Zweckmäßigerweise ist das Verbindungsblech an einer dem Belagblech abgewandten Kante der Stegbleche angeordnet. Ein maximaler Abstand des Verbindungsblechs zu einer Rückseite des Belagblechs beträgt in bevorzugten Ausführungsformen etwa 40-100 mm, bevorzugt etwa 50-90 mm. Der Abstand ist dabei im Mittelbereich des Belagträgers am höchsten, da hier die höchsten Kräfte aufzunehmen sind. Zweckmäßigerweise ist der Abstand des Verbindungsblechs zur Rückseite des Belagträgers in der Mitte der Bremsbacke am höchsten und fällt entlang der Stegeinheit, also entlang einer Umfangsrichtung der Bremstrommel, zu beiden Seiten ab. Damit kann mit Vorteil eine Gewichtsreduktion erreicht werden. Der vorgenannte Abstand entspricht im Wesentlichen der Höhe der Stegbleche, welche im Folgenden noch erwähnt wird. Das Verbindungsblech oder die Verbindungsbleche erstrecken sich im Wesentlichen entlang der Umfangsrichtung. Quer dazu ist die Stegeinheit gemäß einer Ausführungsform durch zumindest ein Querblech verbunden, welches sozusagen ein Ende der Stegeinheit in Umfangsrichtung darstellt. Gemäß einer Ausführungsform ist die Stegeinheit damit vollumfänglich geschlossen. Stegbleche und Querbleche formen eine umlaufende Anordnungsfläche, über welche die Anordnung an der Rückseite des Belagblechs, also der dem Reibbelag abgewandten Seite, erfolgt. Diese geschlossene Struktur ist extrem steif und kann entsprechend dünnwandig und leicht ausgeführt werden. Grundsätzlich sei an dieser Stelle erwähnt, dass der Werkstoff der Stegeinheit, wie auch für das Belagblech, bevorzugt ein Stahlwerkstoff ist. Eine Wandstärke der Stegeinheit liegt in bevorzugten Ausführungsformen bei etwa 1-8 mm, besonders bevorzugt bei etwa 2-6 mm.

Gemäß einer Ausführungsform weist das Verbindungsblech zumindest eine Öffnung oder eine Ausnehmung auf bzw. formt diese. Dies ermöglicht ebenfalls eine weitere Gewichtsreduktion und kann außerdem für eine Wärmeabfuhr aus der einteilig gebildeten Stegeinheit verwendet werden. Die Öffnung kann als Bohrung, insbesondere als runde oder kreisrunde Bohrung ausgebildet sind. Bevorzugt ist aber auch eine längliche Öffnung, welche sich zumindest abschnittsweise entlang der Umfangsrichtung erstreckt. Die Breite der Öffnung ist dabei derart bemessen, dass noch Teile des Verbindungsblechs stehen bleiben. Dies ermöglicht gerade in Längsrichtung/Umfangsrichtung eine hohe Steifigkeit bei geringem Materialeinsatz. Gemäß einer Ausführungsform liegt ein Verhältnis einer Breite des Verbindungsblechs zu einer Breite der Öffnung in einem Bereich von etwa 0,1-0,9, bevorzugt bei etwa 0,2-0,8. Das Verbindungsblech im Allgemeinen ermöglicht vorteilhafterweise eine Erhöhung der Steifigkeit der Stegeinheit sowie eine verbesserte Wärmeabfuhr wie auch Wärmeverteilung. So können über das Verbindungsblech von einem Stegblech zum anderen leicht Wärmeunterschiede und Temperaturspitzen ausgeglichen werden. Über die Anordnungen von Öffnungen/Ausnehmungen in dem oder den Verbindungsblechen oder ggf. auch in den Stegblechen selbst, kann die Temperaturverteilung individuell angepasst werden. Besonders zweckmäßig ist im Verbindungsblech durch zwei benachbart zueinander liegende Öffnung (bspw. runde Öffnung und Langloch) ein Stegbereich ausgebildet, welcher einen Eingriffsbereich zum Einhängen einer Rückzugsfeder bildet.

Gemäß einer Ausführungsform verlaufen die Stegbleche bezogen auf eine Mittelebene des Belagblechs im Wesentlichen bogenförmig, insbesondere konvex. Die Mittelebene ist diejenige Ebene, die mittig und senkrecht zum Belagblech entlang dessen Längsrichtung bzw. entlang der Umfangsrichtung verläuft. In der Regel ist die Mittelebene auch die Symmetrieebene. Die Bogenform ist insbesondere in einer Draufsicht auf die Rückseite der Bremsbacke zu erkennen. Zweckmäßigerweise ist eine Breite der Stegeinheit in der Mitte also größer als an ihren jeweiligen Enden. Zweckmäßigerweise liegt ein Verhältnis einer minimalen Breite zu einer maximalen Breite bei etwa 0,05-0,8, bevorzugt bei etwa 0,08-0,7. Diese Konfiguration ermöglicht eine optimale Festigkeit bzw. Steifigkeit der Bremsbacke bei minimalem Materialeinsatz. Zudem wird durch den Verlauf der Stegbleche auf die Rückseite des Belagblechs die Wärmeabfuhr aus dem Belagblech bestmöglich bewerkstelligt. Gemäß einer Ausführungsform verlaufen die Stegbleche in der Draufsicht auch gerade, sind aber trotzdem so ausgerichtet, dass sie bezogen auf die Mittelebene schräg verlaufen. Ausgehend von den jeweiligen Enden der Stegeinheit beschreiben die Stegbleche also einen Winkel zu Mitte hin, welcher z. B. in einem Bereich von etwa 2°-30°, bevorzugt etwa 4°-25°, und besonders bevorzugt 10°-20° liegt. Zweckmäßigerweise ist die Stegeinheit bezogen auf die Mittelebene symmetrisch, insbesondere achsensymmetrisch, ausgebildet.

Gemäß einer Ausführungsform sind die Stegbleche auch zu einer Mittelebene des Belagblechs hin geneigt. In Kombination mit dem Verbindungsblech ergibt sich also zweckmäßigerweise eine Trapezform, eine Geometrie welche den entstehenden Kräften äußerst gut entgegenwirkt. Ein Winkel des Stegblechs (außen an der Stegeinheit gemessen) relativ zur Rückseite des Belagblechs gemessen liegt gemäß einer Ausführungsform z. B. in einem Bereich von ca. 90°-130°, bevorzugt bei etwa 92°-105°. Insbesondere können die Stegbleche an ihren dem Belagblech zugewandten Seiten bzw. Kanten weiter vonenander beabstandet sein als bei ihren dem Belagblech abgewandten Seiten bzw. Kanten.

Gemäß einer Ausführungsform ist die Stegeinheit derart ausgelegt, dass eine Steifigkeit der Stegeinheit zur Mitte der Bremsbacke hin zunimmt. Dabei bedeutet zur Mitte hin insbesondere "in Umfangsrichtung gesehen" zur Mitte hin. So ist beispielsweise eine Höhe der Stegbleche im mittleren Bereich größer als zu den entsprechenden Endbereichen hin, wo die Bremsbacke gelagert wird oder wo die Krafteinleitung erfolgt. Die Höhenabnahme kann stetig erfolgen oder auch gestuft bzw. in Schritten. Zweckmäßigerweise liegt eine minimale Höhe der Stegbleche, welche im Bereich der Funktionsbereiche am Rand gemessen wird, zu einer maximalen Höhe der Stegbleche in der Mitte in einem Bereich von 0,2 bis 0,8, bevorzugt in einem Bereich von 0,3-0,7. Dabei wird die Höhe der Stegbleche senkrecht zum Belagträger gemessen. Die gilt im Übrigen auch für den Abstand des oder der Verbindungsbleche.

Gemäß einer Ausführungsform umfasst die Bremsbacke zwei Stegeinheiten, welche entlang einer Teilungsebene miteinander verbunden, insbesondere verschweißt, sind. Die Teilungsebene verläuft dabei im Wesentlichen quer zu einer Längsrichtung bzw. Umfangsrichtung der Bremstrommel bzw. der Bremsbacke. Insbesondere steht die Teilungsebene im Wesentlichen auch quer zu der Mittelebene (es ist aber auch ein Winkel ungleich 90° möglich). Eine derartige Konfiguration kann insbesondere im Hinblick auf die Fertigung der Stegeinheit vorteilhaft sein, da sich damit weitere Möglichkeiten ergeben, wie beispielsweise das Falten oder Drücken/Biegen/Dengeln aus einem Stück Blech.

Gemäß einer Ausführungsform formt die Stegeinheit zumindest einen Funktionsbereich, insbesondere einen Lagerabschnitt, welcher insbesondere sphärisch oder zylindrisch ausgebildet ist. Daneben kann ein Funktionsbereich auch ein Krafteinleitungsbereich sein. Im Stand der Technik ist der Krafteinleitungsbereich beispielsweise über eine Nockenrolle gestaltet, welche an den Stegen (drehbar) befestigt ist. Mit Vorteil ist eben diese Funktion durch die zylindrische Ausgestaltung des Funktionsbereichs direkt und unmittelbar durch die Stegeinheit bereitgestellt. Die Lagerung der Bremsbacke erfolgt im Stand der Technik z. B. über eine Kugel, welche an den Stegen über eine entsprechende Lagerschale/Kugelschale befestigt ist. Mit Vorteil ist diese Funktion direkt und unmittelbar durch die sphärische Ausgestaltung des Funktionsbereichs bereitgestellt. Grundsätzlich ist die explizite Gestaltung des Funktionsbereichs - sphärisch, kugelförmig, zylindrisch oder ggf. auch eine andere Geometrie - nicht entscheidend. Wesentlich ist, dass die Stegeinheit selbst diese Geometrie oder Form ausbildet, diese also auch durch Tiefziehen, Schmieden, Biegen, Dengeln, Hydroformen, Drücken etc. hergestellt ist. Dabei können beide Funktionsbereiche gleich oder auch unterschiedlich ausgebildet sein. Der Funktionsbereich wird also bevorzugt zusammen mit der Stegeinheit ausgeformt und bildet mit dieser vorteilhafterweise eine Einheit. Alternativ kann der Lagerabschnitt auch als gesondertes Bauteil an der Stegeinheit form- und/oder kraftschlüssig bzw. stoffschlüssig befestigt bzw. z. B. angeschweißt werden.

Gemäß einer Ausführungsform ist an dem Funktionsbereich oder Lagerabschnitt ein Nadellager angeordnet bzw. vorgesehen. Gemäß einer Ausführungsform weist das Nadellager einen entsprechenden Lagerkäfig auf, um gegenüber der Stegeinheit positioniert werden zu können und sich dem Verlauf einer Nockenkontur anpassen zu können. Der Lagerkäfig wiederum ist zweckmäßigerweise drehbar an dem Funktionsbereich der Stegeinheit befestigt oder angeordnet.

Die Erfindung bezieht sich im Übrigen auch auf eine Stegeinheit, welche die vorgenannten Vorteile und Merkmale aufweist. Insbesondere ist eine Stegeinheit beansprucht, welche als einteiliger Körper umfassend zumindest zwei Stegbleche ausgebildet ist. Zweckmäßigerweise umfasst die Stegeinheit auch noch zumindest einen Funktionsbereich, welcher ebenfalls Teil des vorgenannten einteiligen Körpers ist.

Die Erfindung bezieht sich auch auf eine Trommelbremse umfassend zumindest eine Bremsbacke nach einem der vorhergehenden Ansprüche, sowie ein Nockenelement zur Betätigung der zumindest einen Bremsbacke, wobei an einer Kontaktfläche des Nockenelements eine reibungsmindernde Schicht vorgesehen ist. Diese Schicht kann beispielsweise aus einem abriebfesten Kunststoffmaterial, einem verschleißfesten Gleitlack oder einer Teflonbeschichtung gefertigt sein. Die reibungsmindernde Schicht ist insbesondere auf den für die Stegeinheit verwendeten (Stahl-) Werkstoff abgestimmt, da die Stegeinheit ja direkt und unmittelbar bevorzugt auch den Funktionsbereich, z. B. den Lagerabschnitt und/oder den Krafteinleitungsbereich, ausbildet.

Weitere Vorteile und Merkmale ergeben sich aus der nachfolgenden Beschreibung bevorzugter Ausführungsformen der erfindungsgemäßen Bremsbacke sowie der erfindungsgemäßen Trommelbremse mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine Ausführungsform einer Stegeinheit in einer perspektivischen Darstellung;
- Figur 2:: die aus Figur 1 bekannte Stegeinheit entlang einer Längsrichtung/Umfangsrichtung gesehen;
- Figur 3:: den Schnitt A-A, wie in Figur 2 skizziert;
- Figur 4:: den Schnitt B-B, wie in Figur 3 skizziert;
- Figur 5:: eine Draufsicht auf die aus Figur 1 bekannte Stegeinheit;
- Figur 6:: eine perspektivische Darstellung einer Ausführungsform einer Bremsbacke;
- Figur 7:: eine weitere perspektivische Darstellung einer Ausführungsform einer Bremsbacke;
- Figur 8:: eine Ausführungsform eines Nockenelements;
- Figur 9:: eine weitere Ausführungsform eines Nockenelements, wobei die Bremsbacke mit Nadellagern versehen ist;
- Figur 10:: eine Ausführungsform eines Nadellagers;
- Figur 11:: eine Ausführungsform einer Stegeinheit mit einem daran angeordneten Nadellager.

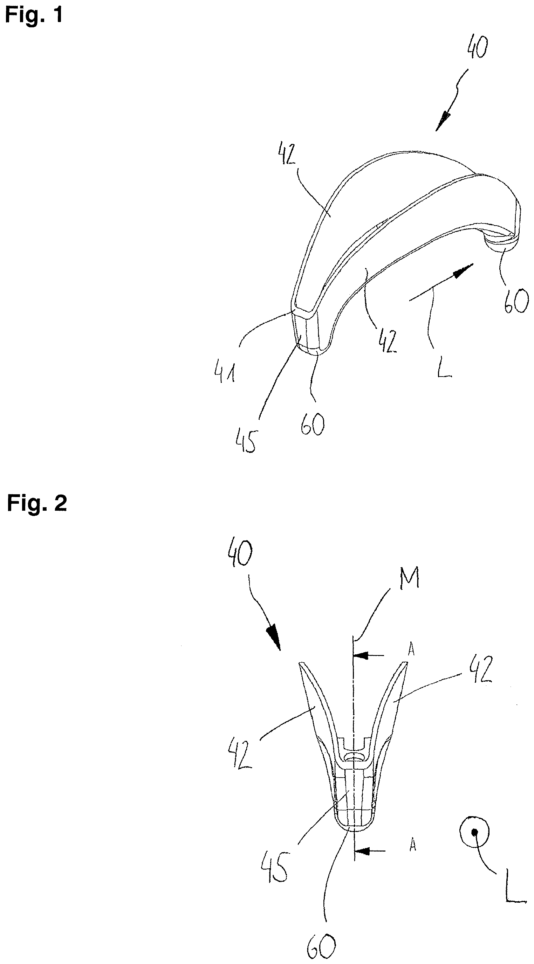

**Fig. 1** zeigt in einer perspektivischen Darstellung eine Stegeinheit 40 umfassend zwei Stegbleche 42, welche über Querbleche 45 verbunden sind. Die Stegeinheit 40 erstreckt sich entlang einer Längsrichtung L (bzw. entlang einer Umfangsrichtung der Bremstrommel) und formt an ihren jeweiligen Enden jeweils Funktionsbereiche 60 aus, wobei der eine (hintere) sphärisch ausgebildet ist, insbesondere kugelförmig, der vordere eher zylindrisch. Deutlich zu sehen ist die einteilige Ausgestaltung der Stegeinheit 40, umfassend die beiden Stegbleche 42, die Querbleche 45 und die Funktionsbereiche 60. Die Stegeinheit 40 bildet eine umlaufende Anordnungsfläche 41 aus, über welche die Anordnung bzw. Befestigung an einem hier nicht dargestellten Belagblech, beispielsweise über eine Schweißverbindung, erfolgt. Dabei wird der große Vorteil der Stegeinheit 40 deutlich, dass nämlich nur ein Bauteil "gehandelt" werden muss. Daneben zeigt sich deutlich die abnehmende Höhe der Stegbleche 42 hin zu den Funktionsbereichen 60. Die Höhe der Stegbleche 42 ist also in der Mitte der Stegeinheit 40 am höchsten und nimmt zu den Enden stetig bzw. kontinuierlich ab.

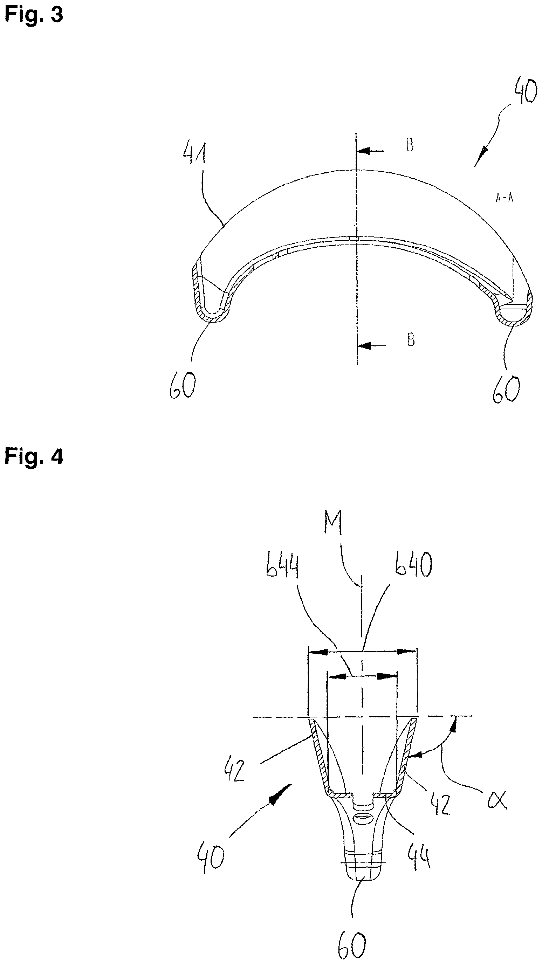

**Fig. 2** zeigt die aus Figur 1 bekannte Stegeinheit 40 entlang der Längsrichtung L bzw. in Umfangsrichtung gesehen. Zu sehen ist die in Bezug auf eine Mittelebene M im Wesentlichen symmetrische bzw. achsensymmetrische Ausgestaltung der Stegeinheit 40. Insbesondere ist in der hier dargestellten Ansicht die Verbindung der beiden Stegbleche 42 über das Querblech 45 dargestellt. Vom Querblech 45 weg erstreckt sich der Funktionsbereich 60 nach unten. Der skizzierte Schnitt A-A ist in Figur 3 dargestellt.

**Fig. 3** zeigt den Schnitt A-A, wie in Figur 2 skizziert. Zu sehen ist insbesondere der Verlauf der Anordnungsfläche 41 sowie die seitliche Kontur der beiden Funktionsbereiche 60. Erkennbar ist auch, das eine Höhe der Stegeinheit 40 zu Ihren Enden hin abnimmt. Der skizzierte Schnitt B-B ist in Figur 4 dargestellt.

**Fig. 4** zeigt insbesondere die im Wesentlichen trapezförmige Ausgestaltung des Querschnitts der Stegeinheit 40. Insbesondere ergibt sich die Trapezform durch die Lage und Orientierung der Stegbleche 42 relativ zum Verbindungsblech 44. Somit ergibt sich eine Breite b40 der Stegeinheit und eine Breite b44 des Verbindungsblechs 44, wobei ein vorteilhaftes Verhältnis hierbei in einem Bereich von etwa 1,0 bis 2,0, vorzugsweise 1,3 bis 1,7 liegt. Gestrichelt angedeutet ist die Orientierung eines Belagblechs. Zwischen dem Belagblech und dem Stegblech 42 bemisst sich ein Winkel α, welcher in bevorzugten Ausführungsformen beispielsweise in einem Bereich von ca. 90° bis 130°, vorzugsweise 92° bis 105° liegt.

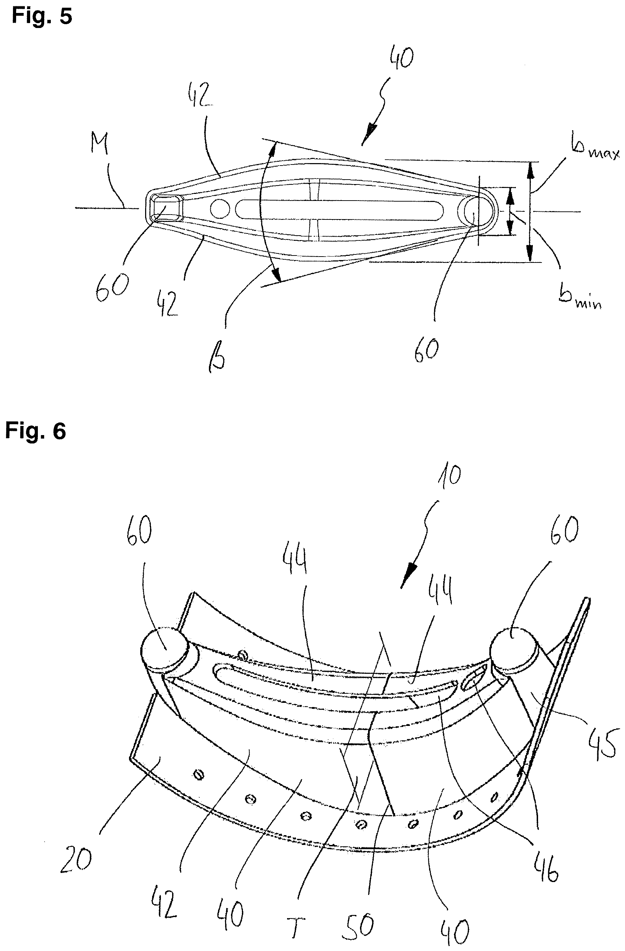

**Fig. 5** zeigt die in Figur 3 zu sehende Stegeinheit nach unten geklappt. Deutlich wird hier insbesondere der Verlauf der Stegbleche 42, welcher im Wesentlichen als konvex bezeichnet werden kann. Hierbei schließen die Stegbleche 42 einen Winkel β ein, welcher z. B. in einem Bereich von etwa 2° bis 30°, vorzugsweise 4° bis 25° oder 10° bis 20° liegt. Deutlich werden auch die Breitenverhältnisse der Stegeinheit 40, wobei eine maximale Breite bₘₐₓ in einem Mittelbereich der Stegeinheit bei etwa 100 mm bis 120 mm liegt, während eine minimale Breite bₘᵢₙ in einem Bereich von etwa 40 mm bis 50 mm liegt. Die minimale Breite bemisst sich dabei etwa im Bereich der Funktionsbereiche 60.

**Fig. 6** zeigt eine Bremsbacke 10, umfassend ein Belagblech 20, an welcher zwei Stegeinheiten 40 über eine Schweißverbindung befestigt sind. Die beiden Stegeinheiten 40 sind entlang einer Schweißverbindung 50 entlang einer Teilungsebene T miteinander verschweißt. Die Stegeinheiten 40 umfassen seitliche Stegbleche 42 sowie Querbleche 45. Überdies sind die Stegbleche 42 durch Verbindungsbleche 44 verbunden, welche sich derart zu dem Belagblech 20 erstrecken, dass die Verbindungsbleche 44 einen größeren Krümmungsradius als das Belagblech 20 aufweisen. Das Verbindungsblech 44 formt eine längliche Öffnung 46 aus. Die Stegeinheiten 40 umfassen jeweils einen Funktionsbereich 60, wobei hier beide sphärisch bzw. kugelförmig ausgebildet sind.

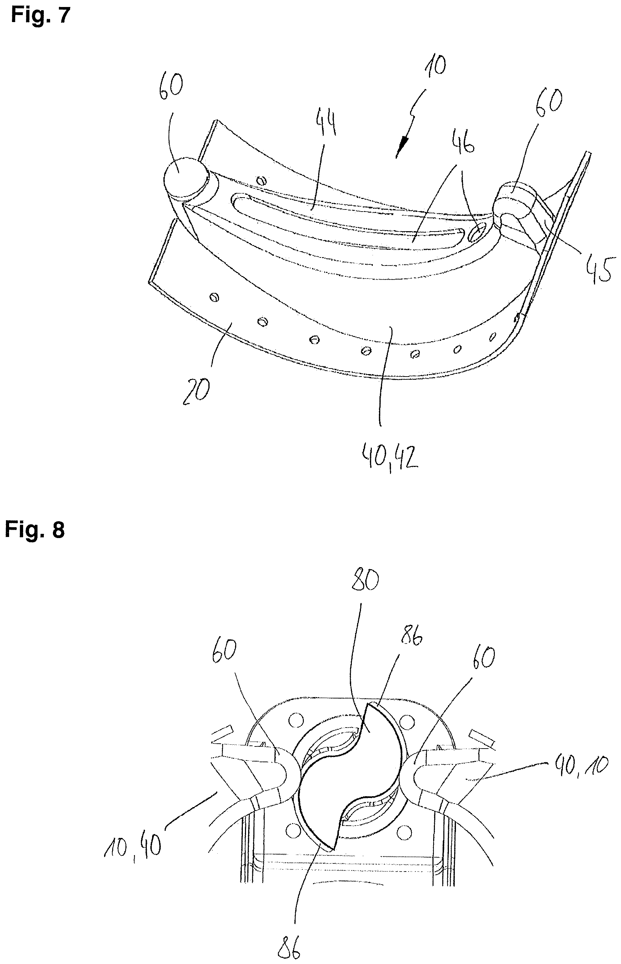

**Fig. 7** zeigt eine ähnliche Konfiguration einer Bremsbacke 10 wie aus Figur 6 bekannt. Der Unterschied liegt hier darin, dass hier nur eine Stegeinheit 40 vorgesehen ist. Überdies ist hier ein rechter Funktionsbereich 60 zylinderförmig ausgebildet.

**Fig. 8** zeigt ein Nockenelement 80, welches der Betätigung zweier Bremsbacken 10, welche hier nur ansatzweise dargestellt sind, dient. Die Krafteinleitung erfolgt an den entsprechenden Funktionsbereichen 60 der Bremsbacken 10 bzw. der Stegeinheit 40. Angedeutet ist eine reibungsmindernde Schicht 86, welche auf dem Nockenelement 80 angeordnet ist und welche das Reibverhalten zwischen dem Nockenelement 80 und den Funktionsbereichen 60 verbessert.

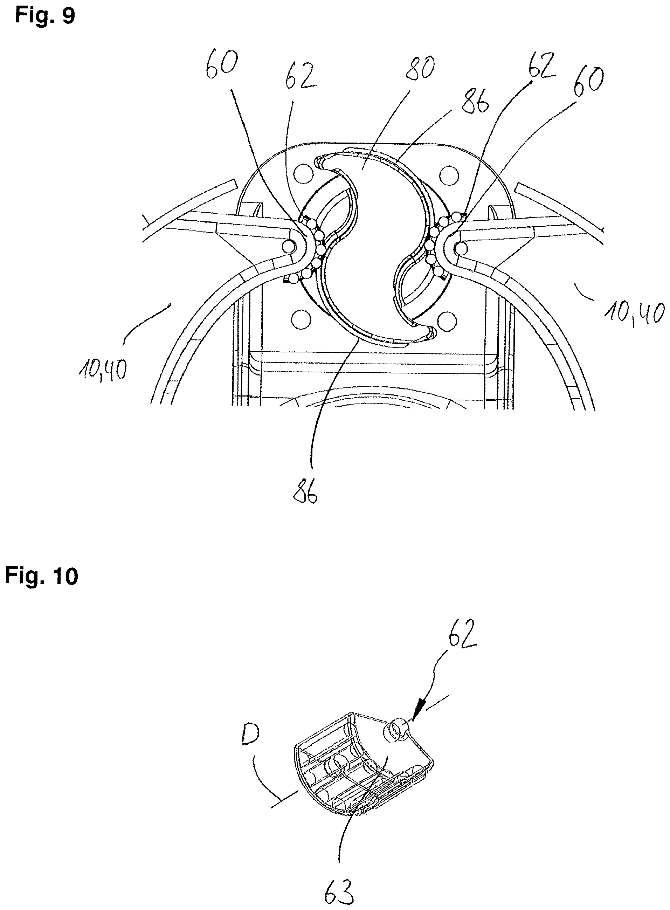

**Fig. 9** zeigt im Wesentlichen die aus Figur 8 bekannte Konfiguration, wobei hier ein Nadellager 62 an einem Funktionsbereich 60 einer Bremsbacke 10 angeordnet ist. Auch hier ist das Nockenelement 80 mit einer reibungsmindernden Schicht 86 versehen.

**Fig. 10** zeigt das Nadellager 62 in einer Detaildarstellung. Zu sehen ist hier insbesondere ein Lagerkäfig 63, welcher drehbar an einem Funktionsbereich 60 der Stegeinheit 40 befestigt werden kann. Angedeutet ist hierbei eine entsprechende Drehachse D, über welche letztendlich die (drehbare) Anordnung am entsprechenden Funktionsbereich der Stegeinheit erfolgt.

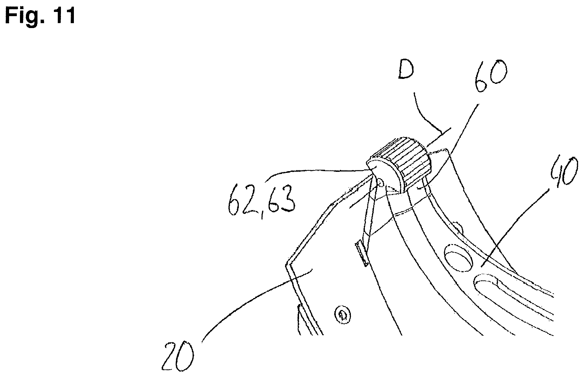

**Fig. 11** zeigt die Anordnung eines Nadellagers 62 mit seinem Lagerkäfig 63 an einer Stegeinheit 40 bzw. dessen Funktionsbereich 60. Um eine Drehachse D ist eine entsprechende Beweglichkeit bereitgestellt.

### Bezugszeichenliste

- 10: Bremsbacke
- 20: Belagblech
- 40: Stegeinheit
- b40: Breite der Stegeinheit
- bₘᵢₙ: minimale Breite (der Stegeinheit)
- bₘₐₓ: maximale Breite (der Stegeinheit)
- 41: Anordnungsfläche
- 42: Stegbleche
- 44: Verbindungsblech
- 45: Querblech
- 46: Öffnung
- 50: Schweißnaht
- 60: Funktionsbereich, Lagerabschnitt, Krafteinleitungsbereich
- 62: Nadellager
- 64: Lagerkäfig
- 80: Nockenelement
- 86: reibungsmindernde Schicht
- M: Mittelebene
- T: Teilungsebene
- L: Längsrichtung
- D: Drehachse
- α, β: Winkel

## Patentansprüche

1. Bremsbacke (10), insbesondere einer Trommelbremse für Nutzfahrzeuge, umfassend ein Belagblech (20) und eine Stegeinheit (40),
wobei die Stegeinheit (40) als einteiliger Körper umfassend zumindest zwei Stegbleche (42) ausgebildet ist.

2. Bremsbacke (10) nach Anspruch 1,
wobei die Stegeinheit (40) ein Tiefziehteil ist, und
wobei die Stegeinheit (40) und das Belagblech (20) bevorzugt über eine Schweißverbindung verbunden sind.

3. Bremsbacke (10) nach einem der vorhergehenden Ansprüche,
wobei die Stegeinheit (40) ein Verbindungsblech (44) aufweist, welches die zwei Stegbleche (42) verbindet.

4. Bremsbacke (10) nach Anspruch 3,
wobei das Verbindungsblech (44) zumindest eine Öffnung aufweist.

5. Bremsbacke (10) nach einem der vorhergehenden Ansprüche,
wobei die Stegbleche (42) bezogen auf eine Mittelebene (M) des Belagblechs (20) im Wesentlichen bogenförmig verlaufen, insbesondere konvex.

6. Bremsbacke (10) nach einem der vorhergehenden Ansprüche,
wobei die Stegbleche (42) zu einer Mittelebene (M) des Belagblechs (20) hin geneigt sind.

7. Bremsbacke (10) nach einem der vorhergehenden Ansprüche,
wobei die Stegeinheit (40) derart ausgelegt ist, dass eine Steifigkeit der Stegeinheit (40) zur Mitte der Bremsbacke (20) hin zunimmt.

8. Bremsbacke (10) nach einem der vorhergehenden Ansprüche,
wobei die Stegeinheit (40) im Querschnitt zumindest abschnittsweise eine Trapezform aufweist.

9. Bremsbacke (10) nach einem der vorhergehenden Ansprüche,
umfassend zwei Stegeinheiten (40) welche entlang einer Teilungsebene (T) miteinander verbunden, insbesondere verschweißt sind.

10. Bremsbacke (10) nach einem der vorhergehenden Ansprüche,
wobei die Stegeinheit (40) zumindest einen Funktionsbereich, insbesondere einen Lagerabschnitt (60) beispielsweise zur Anordnung eines Nadellagers (62), formt, welcher insbesondere sphärisch oder zylindrisch ausgebildet ist.

11. Bremsbacke (10) nach Anspruch 10,
wobei an dem Funktionsbereich (60) ein Nadellager (62) angeordnet ist.

12. Stegeinheit einer Bremsbacke für Trommelbremsen, insbesondere für Nutzfahrzeuge, welche als einteiliger Körper ausgebildet ist und zwei Stegbleche (42) aufweist.

13. Stegeinheit nach Anspruch 12,
weiterhin umfassend einen Funktionsbereich, der vorzugsweise Teil des einteiligen Körpers ist.

14. Trommelbremse, umfassend
zumindest eine Bremsbacke (10) nach einem der vorhergehenden Ansprüche, und
ein Nockenelement (80) zur Betätigung der zumindest einen Bremsbacke (10),
wobei eine Kontaktfläche des Nockenelements (80) eine reibungsmindernde Schicht (86) aufweist.
